# EUROPEAN PATENT APPLICATION

(11) **EP 1 965 354 A1**
(43) Date of publication of application: **03.09.2008**
(21) Application number: 07425121.6
(22) Date of filing: 02.03.2007
(51) Int. Cl.: G07B 15/00, G07C 9/00

(54) **Service management system and method**

(71) Applicant: Gemmo S.p.A., 36057 Arcugnano VI (IT)
(72) Inventor: Gemmo, Mauro, 36057 Arcugnano (Vicenza) (IT)
(74) Representative: Siniscalco, Fabio

(57) **Abstract**

A method (20) is described for the management of a service to be delivered, comprising the steps of:
- providing a user with a portable radio device (1) having first and second associated identifiers;
- providing a management apparatus (2, 5) to send enablement signals for the service delivery, which can be connected via radio to the portable device (1) and which stores said identifiers;
- authenticating (22) the portable device and/or the management apparatus before delivering the service.

The method being characterized in that the authentication step comprises the steps of:
- decrypting (24) at the management apparatus the first identifier received in encrypted form from the portable device, and checking that it is stored at the management apparatus;
- digitally signing (23) said second identifier at the portable device or management apparatus and sending a relative digital signature;
- validating (25) said digital signature received at the management apparatus or portable device.

## Description

### Field of the invention

The present invention relates to a method for the service delivery management which employs a user-associated portable radio communication device. In particular, the present invention relates to services such as, by way of example and not as a limitation, gate control and the procurement of goods.

### State of the art

According to the conventional service delivery modes, it is assumed the use by the users of different tools, such as credit/debit cards, magnetic cards, active and/or passive RFID tags, each with its own features and its own suppliers and retailers.

The credit/debit cards can be used on suitable stationary terminals in shops and commercial concerns, where with the optional dialling of a personal code, they allow transactions on a bank network, which are aimed at purchasing goods and/or services, certified with an optional signature confirming the transaction.

Each credit/debit card has a 16-digit unique identifier, an emission date, an expiry date on the cardholder's name, and some of them even a 3-digit security code, beside a cardholder's signature copy, which the shopkeeper should check at any purchase, a rule which usually is not met for small-amount transactions.

It is understood that the use of codes and identifier elements which are visible to the public and the shopkeepers are crucial elements, which try to the limit the transactions security, since, if the bank network offers secure transactions, the distinctive elements which characterize the beginning of such transactions, among which the above-mentioned 16-digit unique identifiers, emission dates, expiry dates, cardholders' names and, optionally, 3-digit security codes, are not as much impenetrable.

As regards gate control (such as, for example, automobile parking areas, subway stations or access to private zones, or limited traffic zones, LTZs), magnetic cards or RFID tags are generally used, which are optionally associated to a personal code, or biometric detection. For apparent reasons, related to the gate security, each service provider (i.e. metropolitans, transports, motorways) or each access space manager (i.e. hotels, firms) tends to use different technologies and customized access modes, to ensure the maximum autonomy and privacy of the information it detains.

Essentially, the user shall be provided with different devices in order to access different places, by establishing a great number of cards and devices, each potentially with its own code and its own series of features or drawbacks (i.e., magnetic or electric interferences).

As regards LTZs and motorway gates, battery-powered devices are used, according to the conventional techniques, which are able to check the passage of a vehicle under a gate or a privileged access, optionally associated with coupons and identification stamps to be attached or exhibited inside the vehicle.

Technically, using suitable electromagnetic waves, the control units installed on board of the motor vehicles dialogue with the control units installed on the gates, thereby certifying the passage of a given car in a given position, then the passage can induce a successive administrative step, aimed at the delivery of a service, or the verification of an illegal act, with consequent lifting of a sanction by the Authority.

It should be noted that the control units installed on board of motor vehicles only identify the vehicles, but not the driver, who, if needed, is not able to proceed into a LTZ where he/she would be allowed to pass, when he/she does not have the suitable certifications for the passage (i.e. a general rent car). A similar consideration applies for unauthorized drivers, who can instead use preferential passages/parking spots, for example for disabled people, while being fully able, but in possession of coupons or control units which ensure the passage for the driven vehicle.

### Summary of the invention

The object of the present invention is to provide a service management method alternative to conventional methods and which, preferably, combines the use simplicity by the users and the security and/or privacy required by the particular service.

The object of the present invention is achieved by a service management method as defined by the annexed claim 1. Preferred embodiments of such a method are as described by the dependent claims 2 to 25. The object of the present invention is also a management system and a computer programme as defined by claims 26 and 27, respectively.

### Brief description of the figures

In order to better understand the invention and appreciate the advantages thereof, some exemplificative and non-limiting embodiments thereof are described below, with reference to the annexed drawings, in which:
- Figure 1 schematically illustrates a service management system according to an exemplary embodiment of the invention;
- Fig. 2 is a flowchart that illustrates an example of a service management method according to an example of the invention;
- Fig. 3 illustrates an authentication step of said method;
- Fig. 4 illustrates an operative step of said method;
- Fig. 5 illustrates an authentication step of said method alternative to the one in Figure 3.

### Description of the preferred embodiments

### Management system

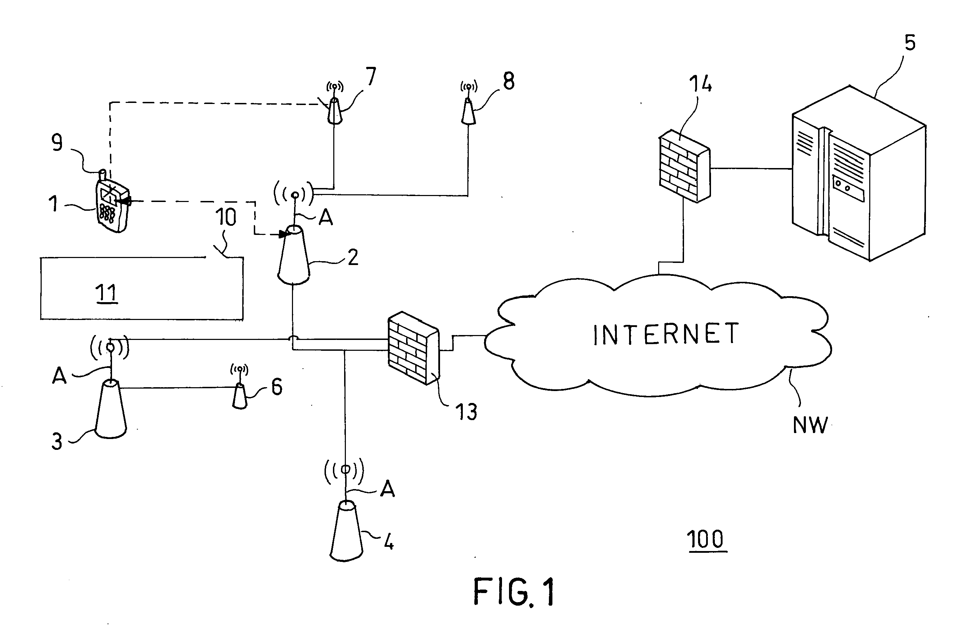

Fig. 1 schematically shows a management and service delivery system 100 implemented according to a particular embodiment of the invention. The system 100 comprises at least one portable radio device 1, one or more local management devices 2, 3, and 4, and advantageously, also an internet network NW for the connection to a preferred central processing apparatus 5 (server 5 is not essential for the authentication step implementation).

According to a first exemplary embodiment, the service management system 100 can be employed for the management of gate control, the opening of which a user of the portable radio device 1 requires. Gate control comprises, for example, automobile parking areas, subway stations, private zones in a broad sense, limited traffic zones (LTZs), perimeter control, alert enablement/disablement.

In the description below, while reference will be made, for simplicity, to a single user and a single portable device 1, the invention can be however applied to a plurality of users of the services delivered by the system 100, who have their own portable radio devices.

By way of non-limiting example, the system 100 can be employed to induce the opening of a port 10, or of other gate closing/opening means (such as, for example, a gate, a bar) located at the entrance of a reserved area 11 (such as, for example, an automobile parking, a private zone or a limited traffic zone, LTZ). In the schematization of Figure 1, with reference number 10 is designated the opening/closing means (for example, a port ) including an actuating apparatus able to induce the automatic opening and closing of the port based on a suitable control signal.

The portable device 1 preferably is a mobile phone, advantageously of the cellular type, and operates inside a mobile telephone network. The cellular telephone 1 is conventional *per se,* hence it does not require a detailed description, and it comprises a receiver-transmitter device connected to a respective antenna 9; a central processing unit adapted to exchange information/data-carrying signals with the receiver-transmitter device; working and mass memories; and a user interface including a display and an alphanumeric keyboard.

Particularly, the cellular telephone 1 is provided with a **Network Device Communication Object**, also conventional, i.e. a digital interface which allows the processing unit to suitably dialogue with the mobile phone network. The mobile phone network is for example a GPRS (General Packet Radio Service) network or a UMTS (Universal Mobile Telecommunications System) network.

A telephone number is associated with the cellular telephone 1 in order to be employed to call this cellular telephone from other phones via the mobile phone network. Advantageously, the cellular telephone 1 is further provided with a communication device with wireless technology, beside the mobile phone network technology. For example, the wireless technology which is employed is WiFi, ZigBee, Wibree or, preferably, BlueTooth.

Furthermore, at least two different identifiers are associated with the cellular telephone 1 such as, for example:
- a terminal identification code or IMEI (acronym for International Mobile Equipment Identity), which is a unique string identifying the cellular phone;
- a Network Device Address, such as a MAC (Media Access Control) Address, which is a univocally assigned code to said communication device with wireless technology employed by the cellular telephone 1 and which differentiates it from any other network devices.

It should be noted that the communication device with wireless technology provides inexpensive and safe protocols to exchange information between different devices using radio waves. Consequently, the cellular telephone 1 can exchange data and information through wireless technology, for example with Personal Digital Assistant (PDA), cellular phones, portable phones, computers, printers, photo cameras, or the like.

Generally the wireless protocols are able to detect and put in communication devices within a range of 10 meters (300 meters with the new developments of the protocols), with a bandwidth sufficient for text, audio, and video messages exchange. Where the network card employed by the cellular telephone 1 is also of the Bluetooth type, the MAC Address is a 48-bit (6-byte) BlueTooth address which univocally identifies the relative network card.

Preferably, a suitable service request software is located in a digital memory of the cellular telephone 1 such as, for example, a Java and/or C language-based software.

Preferably, the software module containing the application software necessary for the implementation of the management method which will be described further below can be automatically installed in the cellular telephone 1 through SMS (Short Message Service) connections to hypermedia addresses allowing downloads, via GPRS/UMTS/WLAN networks. Such a download operation can be also carried out through MMS (Multimedia Messaging Service) messages, containing the application software, thereby minimizing installation and uploading problems.

Each of the local management devices 2, 3, and 4 (herein below, for brevity, local devices) comprises a receiver-transmitter device (not shown in Figure 1) provided with relative antenna A for a wireless connection to the cellular telephone 1; a programmable computer (for example, a microcontroller); a further network card, in particular, of the BlueTooth type. The local devices 2-4 are able to communicate with the cellular telephone 1, particularly through the BlueTooth technology.

In accordance with a preferred embodiment of the invention, the system 100 comprises also one or more radio base stations 6-8 adapted to operate by the wireless technology employed by the cellular telephone 1 (BlueTooth, according to the example discussed herein). Furthermore, each of these radio base stations 6-8 is provided with interfaces which are suitable to communicate with at least one of the local devices 2-4 through a wireless or cable connection (according to the geography of the installation territory) and according to suitable protocols. These radio base stations 2-4 can put the cellular telephone 1 in communication with one or more of said local devices 2-4 whenever a direct connection cannot be possible, for example due to an excessive distance between the cellular telephone 1 and the local apparatus of interest for the service to be required.

Advantageously, each local apparatus 2-4 is implemented so as it can also communicate with the central processor 5 through the internet network NW. Furthermore, a suitable software Java for the service delivery and a local Relational DataBase for a first identification of the cellular telephone 1 or of other terminals associated to users which use the service is, preferably, installed in the local devices 2-4.

According to the first exemplary embodiment discussed herein, in relation with the gate access management, the local devices 2-4 can be stationary structures, for example, column or "totem" structures, inside which there is the equipment defined above and suitably energized.

Particularly, the local apparatus 2 can be located in the vicinity of the port 10 and is connected to the latter, such as to be able to send control signals in order to enable the port opening/closing actuating apparatus and to receive signals from the port 10 indicative of the closed or opened status of the latter.

The central processor 5 is preferably a server computer (while the local devices 2-4 act as a client) and stores therein all the data and information relative to the different users and to the operations, either authorized and unauthorized, that are carried out.

The central server 5 takes care, after an operation has been successful, of the pricing and payment activities, by interfacing its own systems with the ERP (Enterprise Resource Planning) and databases of the most popular manufacturers on the market, such as Oracle, SAP, Microsoft, SUN, IBM, Informix, etc.... When the central server 5 is not provided for, these operations can be performed by one or more of the local devices 2-4.

Advantageously, the server directly interfaces also on the national bank network to allow the debiting, crediting operations both at the Bank checking account level and inside the credit cards circuit (i.e., VISA, AMEX, Mastercard).

Preferably, the local devices 2-4 and the central server 5 are connected to the internet network NW via VPN (Virtual Private Network) networks and via Firewall devices 13 and 14 so as ensure communication security. Particularly, the connection between each of the local devices 2-4 and the VPN network 13 can be either of the cabled or wireless type.

To the purposes of communications security and privacy, these take place making use of an encryption technique, in particular the asymmetric encryption. For example, a first public key PBK1, a first private key PRK1, and a first digital certificate C1 which states the correspondence between public key PBK1 and user of the cellular telephone 1 are associated with the cellular telephone 1. The first certificate C1 is distributed by the cellular telephone 1 to one or more local devices 2-4 in contact with the same telephone.

A second public key PBK2, a second private key PRK2, and second digital certificate C2 which states the correspondence between the second public key PBK2 and the local apparatus 2 are associated to the local apparatus 2. The second digital certificate C2 is distributed, in real time, to all the local users requesting the service offered by the system 100. Other public and private keys associated to other users provided with cellular telephone are similarly managed.

Particularly, the asymmetric key technology employed makes use of certificates C1 and C2 of the X.509 type and the processing related to the encryption and decryption procedures are carried out by suitable software modules loadable in the cellular telephone 1 and local apparatus 2 memories.

### Operative method

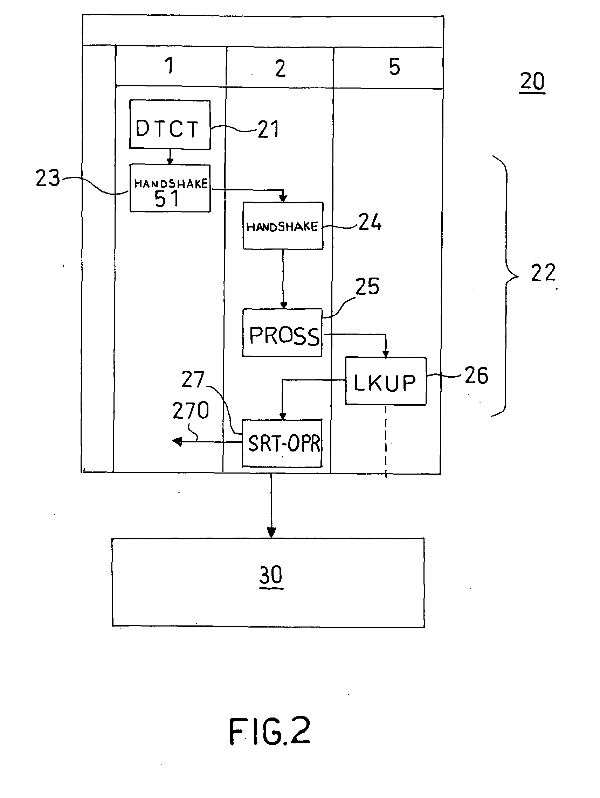

It will be now considered a first operative method of the system 100. For example, it will be assumed that the cellular telephone 10 user wants to access the parking 11, therefore drives, for example, with his/her own automobile to the local apparatus 2. In Fig. 2 the operative method 20 is shown in the form of a flowchart which provides for a signal exchange between the cellular telephone 1, the local apparatus 2 and, in some cases, the central server 5.

First, a detection step 21 (DETECT) takes place, in which the local apparatus 2, through the wireless (BlueTooth) connection, detects the presence of the cellular telephone 1 being inside an area of a range equal to the maximum capacity of the wireless connection. After the detection step, an authentication step 22 can be activated.

During a first exchange, or "handshake", step 23, the software module of the cellular telephone 1 uses the second public key PBK2 in order to encrypt the Network Device Address (in particular, the MAC Address) of cellular telephone 1. Furthermore, the software module of the cellular telephone 1 uses the first private key PRK1 in order to execute the digital signature of its own identifier IMEI. The encrypted MAC Address and the IMEI code with digital signature are sent by the cellular telephone 1 to the local apparatus 2 in the form of suitably modulated radio signals S1.

During a second "handshake" step 24, the local apparatus 2 receives signals S1 and initiates a further processing also comprising, for example, data exchanges with the central server 5.
In greater detail, in a processing step 25 (PROSS) the software module of the local apparatus 2 uses the second private key PRK2 to decrypt the MAC Address received in the encrypted form.

After this MAC Address has been obtained, the local apparatus 2 checks if a user is present in its relational database who is associated with that particular MAC Address. If this comparing step turns out to be positive, one can trace the personal data of the user containing, between other information, the IMEI code of the cellular telephone 1 and the user's certificate C1.

Subsequently, the local apparatus 2 employs the user's certificate C1 to get the user's public key and thus validate the code IMEI signature, so as to ensure that the IMEI code has been sent from the very cellular telephone 1. The thus-received IMEI code is compared with the one previously stored and is associated with the user to be identified.

It should be noted that these operations described with reference to the processing step 25 can be carried out by the local apparatus 2 also by interfacing with the central server 5 in which, for example, address MAC Address, code IMEI, and certificate C1 can be stored. The look up of the data stored in the central server 5 is represented in Figure 1 through a look up step 26 (LKUP). Similarly, the decryption processing of the MAC Address and validation of the digital signature described as performed by the local apparatus 2 in the processing step 25 can be either completely or partially carried out at the central server 5 during the aforementioned step 26. For these purposes, the local apparatus 2 can safely connect to the server 5, through the Firewall device 13, the internet network NW, and the Firewall device 14.

At the end of the processing step 25 and/or 26, the local apparatus 2 and/or the central server 5 could ascertain that the cellular 1 has been identified as belonging to a registered user. Subsequently, the local apparatus 2 sends to the cellular telephone 1, in a starting step 27 (SRT-OPR), a positive feedback signal 270 and activates either an encrypted communication run for managing the operations or transactions involving the cellular telephone 1. Where the authentication procedure had a negative outcome (i.e. the cellular is not associated to a registered user), each of the next operations for the service delivery is inhibited.

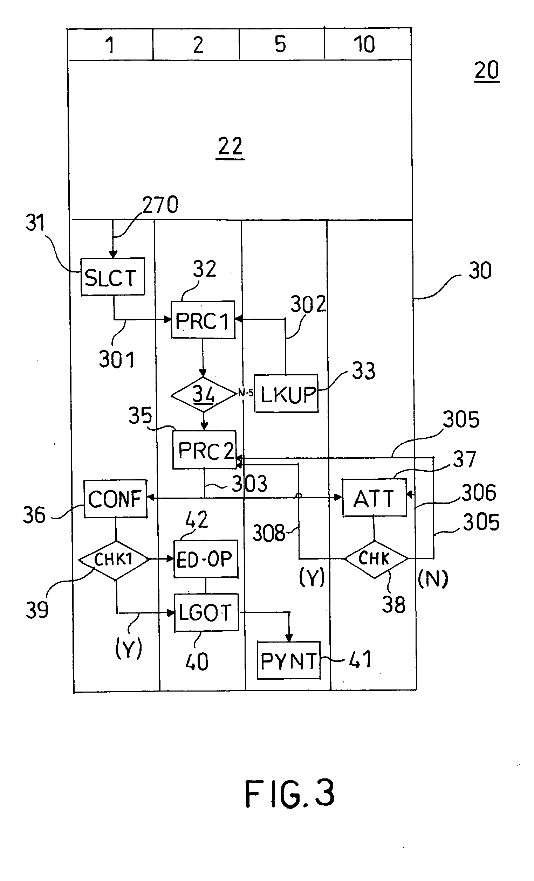

The authentication step 22 is then completed and an operative step 30 begins, which will be described with reference to Fig. 3. Since according to the example described the authentication step 22 has been successful, the cellular telephone 1 can dialogue with local apparatus 2 and/or central server 5, using only the MAC Address as an identifier, again in the encrypted form.

The feedback signal 270 sent by the local apparatus 2 to the cellular telephone 1 carries a data stream relating to the service for which the cellular telephone 1 is enabled and, advantageously, such a data stream is based on the XML (extensible Markup Language) language.

Preferably, the data stream is navigable by the user through his/her own cellular telephone 1 so as allow a direct interaction with the services which are deliverable by the local apparatus 2, for example, through the internet network NW. For example, a menu appears on the cellular telephone 1 display, which lists the various services suitably deliverable and selectable by the user. Advantageously, the navigation through the services deliverable by the system 100 employs an internet network connection mode and protocol that are independent from those implemented by the mobile phone network, where the cellular telephone 1 operates; therefore, according to this embodiment, the Internet WAP (Wireless Application Protocol) connection is not employed.

In accordance with the example described herein, the cellular telephone 1 user decides (selection step 31, SLCT) to employ the service relative to parking and sends, via the same cellular telephone 1, data relating to this service selection (signal 301). The local apparatus 2 processes the received data (step 32, PRC1) and, whenever these were not sufficient, (verification step 34), it queries the central server 5 for further signals (further data exchange 302 and further look up, 33 LKUP).

If the available data are sufficient, then the method proceeds with a further processing step 35, PRC2, during which the local apparatus 2 performs a verification of the user's permissions; in a positive case, it sends an enabling signal 303.

The enabling signal 303, in addition to informing the cellular telephone 1 on the enablement received (confirmation step 36, CONF), also acts as a control signal for the actuating apparatus of port 1 which, consequently, is opened (actuating step ATT, 37), thereby allowing the cellular telephone user's automobile 1 to access area 11.

The operative method described herein comprises additional steps which are particularly advantageous for the management of particular situations.
Particularly, when the port 10 actuating apparatus is not able to complete its assignment and open the port (for example, due to mechanical problems), after a preestablished number of retries (for example, three retries verified through the loop 306) this situation, detected in the verification step 38 (CHK), will be notified to the local apparatus 2 via signals 305. When the opening operation is successfully accomplished, the port 10 actuator sends a success signal 308 to the local apparatus 2.

The success message or the impossibility to carry out the required operation message is sent to the cellular telephone 1 via the signal 303.

Furthermore, a procedure is initiated for the management of such a situation occurring when the cellular telephone 1 user leaves the operating range of the wireless connection (of the BlueTooth type, according to the described example) to the local apparatus 2.

The software module of the cellular telephone 1 checks (step 39, CHK1) whether the cellular telephone 1 is within the operating range of the local apparatus 2. If this is the case (branch Y), the local apparatus 2 starts, on cellular telephone 1 demand, a connection-closing procedure 40 (LGOT), which starts a pricing procedure 41 (PYNT), which terminates the operating method of the system 100. Furthermore, the local apparatus 2 sends the cellular telephone 1 a message confirming the operation termination.

When the local apparatus 2 detects that the cellular telephone is outside the operating range, it will be the same local apparatus 2 to activate (operation termination step 42, AND-OP) the steps 40 and 41 and success messages will not be able to be sent to the cellular telephone 1.

During the performing of the operation, the information stream can preferably include some further operative steps, which may be transparent to the cellular telephone 1 user, such as:
- query the user for his/her personal code PIN, by means of the enabling signal 303, in order to ascertain the cellular telephone 1 owner;
- sending via the radio mobile network a SMS message and/or an e-mail (optional) from the central server 5 to the cellular telephone 1 as a receipt of the accomplished operation.

Regarding the pricing procedure, the central server 5 evaluates optional administrative burdens and activates backoffice payment processes, providing to generate a payment request and permission to remote servers, which will take care to complete the administrative stage of the entire operation, thereby accomplishing a financial transaction through a banking network or credit/debit cards.

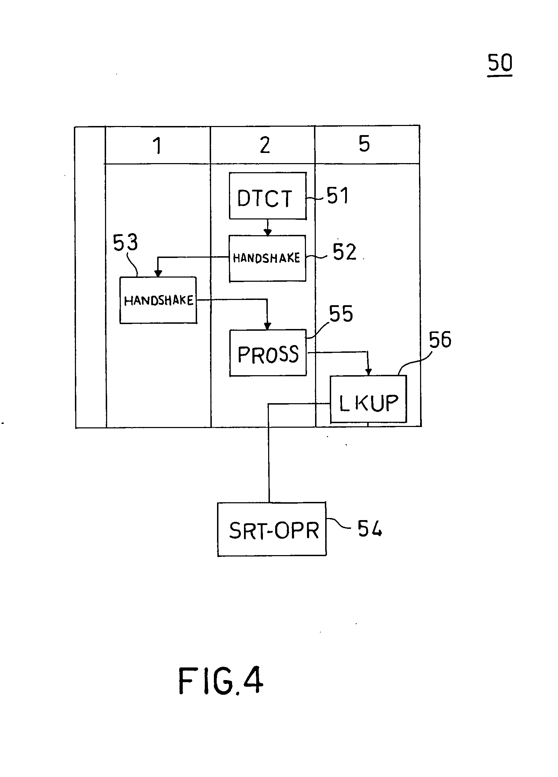

According to an embodiment of the invention as shown in Fig. 4, and alternative to the one in Fig. 2, the authentication procedure is not activated by the cellular telephone 1, but by the local apparatus 2.

The authentication mode in Fig. 4 uses the same certificates C1 and C2 and the same asymmetric keys PRK1, PBK1 and PRK2 and PBK2 as those associated with the cellular telephone 1 and local apparatus 2 described above with reference to Fig. 2.

Initially, the local apparatus 2 gets the BlueTooth address (i.e., the MAC Address) of the cellular telephone 1 after receiving it in the encrypted form and decrypting it (detection step 51, DTCT).

Furthermore, the local apparatus 2 checks that such an address via the Mac Address is present as a unique key in its own Relational Data Base of users which are enabled to the system and, this being the case, it gets the necessary information about the user, such as, *inter alia,* his/her IMEI code. When these data are not locally available to the local apparatus 2, the latter will delegate these operations to the central server 5. Furthermore, the local apparatus 2 uses the second private key PRK2 to digitally sign the IMEI code of the cellular telephone 1 and send it to the cellular telephone 1 (handshake step 52, HANDSHAKE).

The cellular telephone 1 receives (further exchange step 53) data sent by the local apparatus 2 and uses the second public key PBK2 contained in the certificate C2 to check the validity of the signature data on its own IMEI code. If the validation is successfully terminated, then the cellular telephone 1 returns a favourable feedback to the local apparatus 2, which will be now able to initiate the operation (starting step 54, SRT-OPR) preferably after checking the credentials of the cellular telephone 1 via a processing step 55 (PROSS) and/or, for example looking up the central server 5 (look up step 56, LKUP) so as to check the IMEI codes and the Mac Address.

The method can proceed as illustrated and described in Figure 3.

### Alternative embodiments

It should be noted that the preferred embodiment described above relates to cellular phones, but the teachings of the present invention are also applicable to other types of portable radio devices such as, for example, a PDA (Personal Digital Assistant) or another type of computer able to wirelessly communicate with the local management devices 2-4.

The type of services which can be offered with the system and method of the invention is very varied. In fact, beside the gate access management described above, other services to which the invention applies can be services in the transports field (for example, real time purchase of tickets) or "cash" services, i.e. services delivered to the person in getting goods (for example, items of goods).

In the case of transports, the inventive method is able to allow for a "on the air" and "real time" purchase of tickets, directly at the vehicle stop, either underground or surface, independently from the telephonic carrier of the radio mobile network, which cannot be used underground. At the vehicle stop, or also on the same vehicle, one of the local management devices 2-4 will be provided, with which the cellular telephone 1, or the particular portable radio device employed will be able to carry out the authentication procedure 22 or 50, hence accomplishing the whole ticket purchasing and debiting operation 30.

The steps of the ticket purchase method are similar to those described in Fig. 3, but the actuation step 37 provides that the local management apparatus, either installed at the vehicle stop or on board the vehicle, sends to the cellular telephone 1 a univocal operation identifier code that can be then checked by the personnel on board.

Also in the case of "cash" services, the management method is similar to those described with reference to Fig. 2-4 and, in this case, the user selects his/her goods of interest (selection step 31, Fig. 3) among a navigable and interactive list which has been locally sent by one of the local devices 2-4.

These selections are then sent to the local management apparatus, which receives the order, again checks permissions (step 34) and asks the user for confirmation of the transaction good outcome via the cellular telephone 1. The user can then use the service. The user's cellular telephone 1 will receive a signal from the local management apparatus (actuation step 37) containing a code (also stored at the local management apparatus and/or the central server 5), which is an electronic receipt proving the right to clear the desired good.

Differently from what described above, a further portable radio device, such as the device 1, could be provided not to the user who wants to purchase the goods, but to an external operator. In this case, the user uses the service by physically selecting the goods of interest, and the external operator, by interfacing with his/her own portable device, via the local management apparatus, sends the payment request to the user's cellular telephone 1 which request is permitted by the same user, for example by optionally dialling a user code on the cellular telephone 1 interface.

Other services which can be managed with the inventive method and system can comprise: the enablement/disablement of the CCTV (Closed Circuit Television) devices, audio/video streaming, building automation.

### Advantages

The present invention has relevant advantages as compared with conventional technologies.

Particularly, the inventive method has an authentication procedure which offers a high level of security. In fact, the combined use of encryption and decryption steps of the first identifier (for example, Mac Address) and the digital signature validation of the second identifier (for example, IMEI) makes the user identification operation particularly secure.

Furthermore, the preferred use of a cellular telephone is considerably advantageous, since the cellular telephone is the sole commonly used commercial device capable to ensure the necessary requisites of uniqueness, security, and portability, besides limited access barriers for purchase by a private user, beside to elementary customization and installation features of the software.

In addition, it should be noted that the use of identifiers such as Network Device Address and IMEI adds security to the inventive method. In fact, the IMEI code can be only achieved by dialling a suitable code on the cellular telephone, or by reading the string printed behind the battery of the same and, in any event, only the apparatus' proprietor is able to look up these data. The Network Device Address is printed in the data packages sent by the communication device with wireless technology installed in the cellular telephone, therefore is extremely secure.

From the exemplary embodiments described herein, it is inferred that the teachings of the invention allow implementing a service management method and system which has: limited access barriers; use simplicity; rapid diffusion; scalability and modularity; simplicity of integrations with third parties' platforms; technological stability; transparent and secure management of the transactions.

## Claims

1. A method (20; 50, 30) for managing a service to be delivered, comprising the steps of:
- providing a user with a portable radio device (1) having first and second associated identifiers;
- providing a management apparatus (2, 5) in order to send enablement signals for the service delivery, which can be connected via radio to the portable device (1) and which stores said identifiers;
- authenticating (22; 50) the portable device and/or management apparatus before delivering the service;
**characterized in that** the authentication step comprises the steps of:
- decrypting (24, 52) at the management apparatus the first identifier received from the portable device in encrypted form, and checking that it is stored at the management apparatus;
- digitally signing (23, 52) said second identifier at the portable device or management apparatus and sending a relative digital signature;
- validating (25, 53) said digital signature received at the management apparatus or portable device.

2. The method according to claim 1, wherein said portable device (1) is a mobile telephone operating in a radio mobile network.

3. The method according to claim 2, wherein the portable device and the management apparatus are connected via radio through a wireless connection independent from said radio mobile network.

4. The method according to claim 1 or 3, wherein said wireless connection operates according to one of the following protocols: Wi-Fi, ZigBee, WiBree, BlueTooth.

5. The method according to claim 2, wherein one of said identifiers is a Network Device Address of the portable device and the other identifier is an IMEI code of the portable device.

6. The method according to claim 1, further comprising a step in which the asymmetric encryption is employed, including the steps of:
- associating a first public key, a first private key, and a first digital certificate with the portable device;
- associating a second public key, a second private key, and a second digital certificate with the management apparatus.

7. The method according to claim 6, further comprising the steps of:
- storing the second public key and the second digital certificate at the portable device;
- storing the first public key and the first digital certificate at the management apparatus.

8. The method according to at least one of the preceding claims, further comprising the steps of
- providing a delivery apparatus (10) for said service which can be enabled/disabled via said management apparatus.

9. The method according to claim 1, wherein the management apparatus comprises a local apparatus (2) and a remote apparatus connected to said local apparatus for data/information exchange relative to said authentication step.

10. The method according to claim 8 and 9, wherein said local apparatus is located in the proximity of the delivery apparatus (10) and is connected to said remote apparatus through a Internet protected connection.

11. The method according to claim 1, wherein the step of digitally signing (23) said second identifier is carried out at the portable management apparatus and the validation step (25) of said digital signature is carried out at the management apparatus.

12. The method according to claim 1, wherein the step of digitally signing (52) said second identifier is carried out at the management apparatus and the validation step (53) of said digital signature is carried out at the portable device.

13. The method according to claim 1, comprising, after the authentication step, steps of selecting by the user an offered service, and sending a signal indicative of said selection from the portable device to the management apparatus through radio connection.

14. The method according to claim 13, further comprising a step of checking the portable device identity which is based on said first identifier and is performed by the management apparatus (2, 5) after receiving the signal indicative of said selection, by comparing the first identifier with a pre-stored list of identifiers.

15. The method according to claim 13, wherein prior to said service selection step at the portable device, one Internet navigable stream data is sent through said portable device so as to provide the user with a list of possible services.

16. The method according to claim 8, further comprising an operative step (30) subsequent to said authentication step, wherein if said verification and said validation have a positive outcome, the management apparatus sends a control signal to the deliver apparatus (10), inducing it to the activation (37) of a service.

17. The method according to claim 1 or 16, wherein said services comprise at least one of the following services: gate access, good purchase services.

18. The method according to claim 17 when depending on 16, wherein said gate access service comprises at least one of the following control services: automobile parking areas, subway stations, private zones in general, limited traffic zones (LTZs), perimeter control, alert enablement/disablement, and also building automation.

19. The method according to claim 18, wherein said delivery apparatus comprises actuator of an opening/closing means (10) of said gate, which is actuated by the control signal.

20. The method according to claim 17 when depending on 1, wherein said good purchase service comprises at least one of the following services: travel ticket purchase, purchase of items of goods.

21. The method according to claim 20, wherein said operative step comprises an actuation step wherein said management apparatus sends a signal to the portable device which contains a substitutive code representative of the travel ticket or a code representative of a purchase receipt.

22. The method according to claim 1, further comprising a step of carrying out a payment for said delivered service, said payment step being managed by the management apparatus through bank network or credit/debit cards.

23. The method according to claim 1, wherein data indicative of the services already delivered to a user are stored at the management apparatus.

24. The method according to claim 1, further comprising a plurality of further users associated to respective portable radio devices.

25. The method according to claim 1, further comprising a step of unauthorizing the service delivery according to which, in the event the authentication step gives a negative outcome, the service delivery is inhibited by the management apparatus.

26. A system (100) for the management of a service delivery comprising:
- a portable radio device (1) having first and second associated identifiers and being assigned to a user;
- a management apparatus (2, 5) to send enablement signals for the service delivery, connectable via radio to the portable device (1) and such as to store said identifiers; the portable management system, management apparatus, and radio device being configured so as carry out the method described by at least one of the preceding claims.

27. A computer programme storable into a memory of a device and comprising programme codes adapted to perform the steps of the method of claims 1 to 25 carried out by said portable radio device.
